# EUROPEAN PATENT APPLICATION

(11) **EP 4 177 323 A1**
(43) Date of publication of application: **10.05.2023**
(21) Application number: 21834387.9
(22) Date of filing: 02.07.2021
(51) Int. Cl.: C10M 141/08, C10N 10/04, C10N 20/00, C10N 30/00, C10N 30/06, C10N 30/08, C10N 40/02, C10N 40/04, C10N 40/06, C10N 40/08, C10N 40/12, C10N 40/22, C10N 40/30, C10M 135/10, C10M 135/34, C10M 137/10, F16F 9/32

(54) **LUBRICATING OIL COMPOSITION, SHOCK ABSORBER, AND METHOD FOR USING LUBRICATING OIL COMPOSITION**

(30) Priority: 02.07.2020 JP 2020115004
(71) Applicant: Idemitsu Kosan Co.,Ltd., Chiyoda-ku Tokyo 100-8321 (JP)
(72) Inventor: SAKANOUE Shuichi, Chiyoda-ku, Tokyo 1008321 (JP); KOBAYASHI Kenji, Chiyoda-ku, Tokyo 1008321 (JP)
(74) Representative: Vossius & Partner Patentanwälte Rechtsanwälte mbB
(86) International application number: PCT/JP2021/025095
(87) International publication number: WO 2022/004870

(57) **Abstract**

Provided is a lubricating oil composition comprising a base oil (A), a zinc dithiophosphate (B) comprising a compound (B1) represented by the following general formula (b-1), calcium sulfonate (C), and a seal sweller (D). In the general formula (b-1), R¹ to R⁴ are each independently an alkyl group. However, at least one of R¹ to R⁴ is a prescribed straight-chain alkyl group, and at least one of R¹ to R⁴ is a prescribed branched chain alkyl group.

## Description

### Technical Field

The present invention relates to a lubricating oil composition, a shock absorber including the lubricating oil composition, and a method for using the lubricating oil composition.

### Background Art

A lubricating oil composition has been used for lubrication between two members of various machines. For example, a lubricating oil composition containing a zinc dithiophosphate is poured into a shock absorber installed on an automobile body, and is used for lubrication of members for constituting the shock absorber. The shock absorber is a mechanism installed on an automobile body for the purpose of producing a damping force for damping vibration of an automobile body, optimizing frictional characteristics of a sliding part to control ride comfort of an automobile body, suppressing frictional wear of a sliding part to ensure durability, etc.

Regarding the lubricating oil composition for a shock absorber, which can be preferably used for such a shock absorber as above, various developments have been made.

For example, Patent Literature 1 discloses an invention relating to a lubricating oil composition for a shock absorber, comprising a base oil, a tertiary amine having an aliphatic hydrocarbon group having a specific number of carbon atoms, a zinc dithiophosphate, and a phosphoric acid ester amine salt, the invention intending to obtain a lubricating oil composition for a shock absorber which does not produce a precipitate over a long period of time and is capable of reducing a coefficient of friction against a bronze bush and a rubber oil seal.

### Citation List

### Patent Literature

Patent Literature 1
International Publication No. WO 2015/025977

### Summary of Invention

### Technical Problem

By the way, the lubricating oil composition for a shock absorber disclosed in Patent Literature 1 has proved to have room for improvement in heat resistance, oil film retention, wear resistance, etc. On that account, a novel lubricating oil composition that is more suited for, for example, lubrication of a shock absorber has been desired under such circumstances as above.

### Solution to Problem

The present invention provides a lubricating oil composition comprising a base oil, a zinc dithiophosphate, and an alkenylsuccinic acid imide. Specifically, the present invention provides the following embodiments [1] to [13].
[1] A lubricating oil composition comprising a base oil (A), a zinc dithiophosphate (B) comprising a compound (B1) represented by the following general formula (b-1), calcium sulfonate (C), and a seal sweller (D), 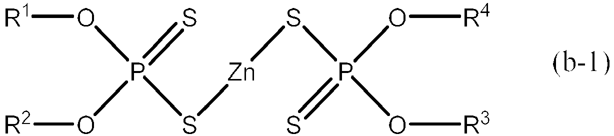 wherein R¹ to R⁴ are each independently an alkyl group;
   with the proviso that at least one of R¹ to R⁴ is a group (I) represented by the following general formula (i), and at least one of R¹ to R⁴ is a group (II) represented by the following general formula (ii): 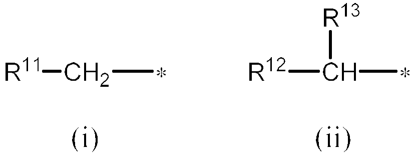 wherein R¹¹ to R¹³ are each independently an alkyl group.
[2] The lubricating oil composition according to the above [1], wherein R¹² and R¹³ in the general formula (ii) are each independently an alkyl group having 1 to 3 carbon atoms.
[3] The lubricating oil composition according to the above [1] or [2], wherein R¹¹ in the general formula (i) is an alkyl group having 1 to 15 carbon atoms.
[4] The lubricating oil composition according to the above [3], wherein the compound (B1) is a compound having, as the groups (I), both of a group (I-1) wherein R¹¹ in the general formula (i) is an alkyl group having 1 to 3 carbon atoms, and a group (1-2) wherein R¹¹ in the general formula (i) is an alkyl group having 4 to 15 carbon atoms.
[5] The lubricating oil composition according to any one of the above [1] to [4], wherein the component (B) has a content of the group (II) of 5 to 70 mol% based on 100 mol% of the total amount of substituents present in the component (B).
[6] The lubricating oil composition according to any one of the above [1] to [5], wherein the component (B) has a content of the group (I-1) of 5 to 80 mol% based on 100 mol% of the total amount of substituents present in the component (B).
[7] The lubricating oil composition according to any one of the above [1] to [6], wherein the component (B) has a content of the group (I-2) of 5 to 70 mol% based on 100 mol% of the total amount of substituents present in the component (B).
[8] The lubricating oil composition according to any one of the above [1] to [7], wherein a content of the component (B), in terms of zinc atoms, is 300 to 1500 ppm by mass based on the total amount of the lubricating oil composition.
[9] The lubricating oil composition according to any one of the above [1] to [8], wherein a base number of the component (C) is 100 mgKOH/g or more.
[10] The lubricating oil composition according to any one of the above [1] to [9], wherein the component (D) comprises an alkoxy sulfolane.
[11] The lubricating oil composition according to any one of the above [1] to [10], wherein the lubricating oil composition is used for a shock absorber.
[12] A shock absorber filled with the lubricating oil composition according to any one of the above [1] to [11] .
[13] Use of a lubricating oil composition, wherein the lubricating oil composition according to any one of the above [1] to [11] is applied to lubrication of a shock absorber.

### Advantageous Effects of Invention

The lubricating oil composition of preferred one embodiment of the present invention is excellent in characteristics such as wear resistance and lubricity, and the lubricating oil composition of particularly preferred one embodiment not only is excellent in wear resistance, but also has high oil film retention to result in excellent lubricity, even when it is used in a high-temperature environment.

### Description of Embodiments

Regarding the numerical range described herein, the upper limit and the lower limit can be arbitrarily combined. For example, there is a recitation "preferably 30 to 100, more preferably 40 to 80" for a numerical range, the range of "30 to 80" and the range of "40 to 100" are also included in the numerical range described herein. Alternatively, for example, there is a recitation "preferably 30 or more, more preferably 40 or more, and preferably 100 or less, more preferably 80 or less" for a numerical range, the range of "30 to 80" and the range of "40 to 100" are also included in the numerical range described herein.

In addition, for example, a recitation "60 to 100" as the numerical range described herein means a range of "60 or more and 100 or less".

### [Constitution of lubricating oil composition]

The lubricating oil composition of the present invention comprises a base oil (A), a zinc dithiophosphate (B), calcium sulfonate (C), and a seal sweller (D).

The lubricating oil composition of one embodiment of the present invention preferably further contains at least one of a friction modifier (E) and a viscosity index improver (F), and more preferably further contains both of a friction modifier (E) and a viscosity index improver (F).

The lubricating oil composition of one embodiment of the present invention may further contain other lubricating oil additives than the components (B) to (F) when needed, as long as the effects of the present invention are not impaired.

In the lubricating oil composition of one embodiment of the present invention, the total content of the components (A) to (D) is preferably 50 mass% or more, more preferably 60 mass% or more, still more preferably 70 mass% or more, still much more preferably 80 mass% or more, and particularly preferably 90 mass% or more, and may be 100 mass% or less, 99.9 mass% or less, 99.0 mass% or less, 98.0 mass% or less, 97.0 mass% or less, or 96.0 mass% or less, based on the total amount (100 mass%) of the lubricating oil composition.

In the lubricating oil composition of one embodiment of the present invention, the total content of the components (A) to (F) is preferably 55 mass% or more, more preferably 65 mass% or more, still more preferably 75 mass% or more, still much more preferably 85 mass% or more, and particularly preferably 95 mass% or more, and may be 100 mass% or less, 99.999 mass% or less, or 99.990 mass% or less, based on the total amount (100 mass%) of the lubricating oil composition.

Details of the components contained in the lubricating oil composition of one embodiment of the present invention will be described hereinafter.

### <Component A: base oil>

As the base oil that is a component (A) used in one embodiment of the present invention, one or more selected from mineral oils and synthetic oils can be mentioned.

Examples of the mineral oils include atmospheric residues obtained by subjecting crude oils, such as paraffinic crude oil, intermediate base crude oil and naphthenic crude oil, to atmospheric distillation; distillates obtained by subjecting these atmospheric residues to vacuum distillation; and refined oils obtained by subjecting the distillates to one or more of refining treatments, such as solvent deasphalting, solvent extraction, hydrocracking, solvent dewaxing, catalytic dewaxing, and hydrorefining.

Examples of the synthetic oils include poly-α-olefins, such as an α-olefin homopolymer and an α-olefin copolymer (for example, an α-olefin copolymer having 8 to 14 carbon atoms such as an ethylene-α-olefin copolymer); isoparaffin; polyalkylene glycol; ester oils, such as polyol ester, dibasic acid ester, and phosphoric acid ester; ether oils, such as polyphenyl ether; alkylbenzene; alkylnaphthalene; and synthetic oil (GTL) obtained by isomerizing wax (GTL WAX (Gas To Liquids WAX)) produced from natural gas through Fischer-Tropsch process or the like.

The component (A) used in one embodiment of the present invention preferably contains, among these, one or more selected from mineral oils classified in Group II and Group III of API (American Petroleum Institute) base oil categories, and synthetic oils.

The aniline point of the component (A) used in one embodiment of the present invention is preferably 70 to 150°C, more preferably 80 to 140°C, still more preferably 85 to 130°C, still much more preferably 95 to 125°C, and particularly preferably 100 to 120°C, in view of obtaining a lubricating oil composition that is excellent in insulation properties and has better swelling properties to a rubber material.

Herein, the aniline point means a value obtained through measurement in accordance with JIS K2256:2013.

The kinematic viscosity of the component (A) used in one embodiment of the present invention at 40°C is preferably 3.0 to 100 mm²/s, more preferably 5.0 to 80 mm²/s, still more preferably 6.0 to 60 mm²/s, still much more preferably 7.0 to 40 mm²/s, and particularly preferably 8.0 to 30 mm²/s.

The viscosity index of the component (A) used in one embodiment of the present invention is appropriately set according to the application of the lubricating oil composition, and is preferably 70 or more, more preferably 80 or more, still more preferably 90 or more, still much more preferably 100 or more, and particularly preferably 105 or more.

When a mixed oil that is a combination of two or more base oils is used as the component (A) in one embodiment of the present invention, the kinematic viscosity and the viscosity index of the mixed oil are preferably in the above ranges.

Herein, the kinematic viscosity and the viscosity index mean values obtained through measurement or calculation in accordance with JIS K2283:2000.

In the lubricating oil composition of one embodiment of the present invention, the content of the component (A) is preferably 40 mass% or more, more preferably 50 mass% or more, still more preferably 60 mass% or more, still much more preferably 70 mass% or more, and particularly preferably 80 mass% or more, and is preferably 99.5 mass% or less, more preferably 99.0 mass% or less, still more preferably 98.5 mass% or less, still much more preferably 98.0 mass% or less, and particularly preferably 97.0 mass% or less, based on the total amount (100 mass%) of the lubricating oil composition.

### <Component (B): zinc dithiophosphate>

The lubricating oil composition of the present invention contains a zinc dithiophosphate (B) containing a compound (B1) represented by the following general formula (b-1).

The component (B) may be used singly, or may be used in combination of two or more. 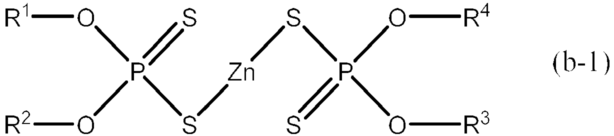 wherein R¹ to R⁴ are each independently an alkyl group; with the proviso that at least one of R¹ to R⁴ is a group (I) represented by the following general formula (i), and at least one of R¹ to R⁴ is a group (II) represented by the following general formula (ii): 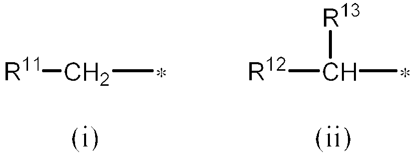 wherein R¹¹ to R¹³ are each independently an alkyl group.

Since the lubricating oil composition contains zinc dithiophosphate (also referred to as "ZnDTP" hereinafter), improvement in wear resistance and oil film retention of the lubricating oil composition can be expected. According to the study by the present inventors, however, it has been found that when a lubricating oil composition containing ZnDTP is used in a high-temperature environment of about 100°C, ZnDTP can be decomposed by heat in a high-temperature environment, and that this can be a factor that causes a decrease in wear resistance of the lubricating oil composition. Moreover, it has been also found that a lubricating oil composition including such ZnDTP that is readily decomposed in a high-temperature environment is inferior in oil film retention. On the other hand, even in the case of a lubricating oil composition including ZnDTP that is difficult to decompose in a high-temperature environment, wear resistance may not be sufficiently exhibited in the first place.

The present inventors have earnestly studied based on these matters, and as a result, they have found that a difference in the decomposition temperature or the decomposition rate of ZnDTP is made depending on the type of a substituent present in the ZnDTP, and the wear resistance or the oil film retention to be exhibited is influenced by the difference of the type of the substituent. Specifically, they have found that ZnDTP having a primary alkyl group and a secondary alkyl group as substituents has a high decomposition temperature and a low decomposition rate, so that it has excellent heat resistance and is capable of exhibiting more excellent wear resistance and oil film retention. The present invention has been completed based on the finding.

Specifically, the component (B) used in the present invention contains a compound (B1).

In the compound (B1), at least one of R¹ to R⁴ in the general formula (b-1) is a group (I) represented by the above general formula (i), and at least one of R¹ to R⁴ is a group (II) represented by the above general formula (ii). In other words, the compound (B1) is ZnDTP having the group (I), which is a primary alkyl group, and the group (II), which is a secondary alkyl group, as substituents.

As embodiments of the compound (B1), the following ones can be mentioned according to a combination of substituents R¹ to R⁴.

Compound in which one of R¹ to R⁴ in the general formula (b-1) is the group (I), and the remaining three are the groups (II).

Compound in which two of R¹ to R⁴ in the general formula (b-1) are the groups (I), and the remaining two are the groups (II).

Compound in which three of R¹ to R⁴ in the general formula (b-1) are the groups (I), and the remaining one is the group (II).

Compound in which one of R¹ to R⁴ in the general formula (b-1) is the group (I), another is the group (II), and the remaining two are groups other than the group (I) and the group (II).

Compound in which one of R¹ to R⁴ in the general formula (b-1) is the group (I), other two are the groups (II), and the remaining one is a group other than the group (I) and the group (II).

Compound in which two of R¹ to R⁴ in the general formula (b-1) are the groups (I), another is the group (II), and the remaining one is a group other than the group (I) and the group (II).

ZnDTP having the groups (I) and (II), such as the compound (B1), has a high decomposition temperature and a low decomposition rate, and exhibits excellent heat resistance. It has been further proved that the ZnDTP having the groups (I) and (II) also has characteristics, including excellent wear resistance and oil film retention.

The lubricating oil composition of the present invention contains the compound (B1) as the component (B), and therefore, even when it is used in a high-temperature environment, it can be a lubricating oil composition that not only is excellent in wear resistance but also has high oil film retention to result in excellent lubricity.

A 50% mass loss temperature as measured on the component (B) used in one embodiment of the present invention by a differential thermal analyzer is preferably 220°C or more, more preferably 225°C or more, and still more preferably 230°C or more.

A difference between 50% mass loss temperature and 5% mass loss temperature as measured on the component (B) used in one embodiment of the present invention by a differential thermal analyzer is preferably 40°C or more, more preferably 45°C or more, and still more preferably 50°C or more.

The "50% mass loss temperature" is an index of a decomposition temperature of ZnDTP, and the "difference between 50% mass loss temperature and 5% mass loss temperature" is an index of a decomposition rate of ZnDTP. Accordingly, as the "50% mass loss temperature" of ZnDTP and the "difference between 50% mass loss temperature and 5% mass loss temperature" are higher and larger, respectively, the decomposition temperature and the decomposition rate are higher and lower, respectively, so that such ZnDTP is ZnDTP having excellent heat resistance.

Herein, the "50% mass loss temperature" is a temperature at which the mass of ZnDTP in question is reduced by 50 mass% from the initial mass. The "5% mass loss temperature" is a temperature at which the mass of ZnDTP in question is reduced by 5 mass% from the initial mass. Specifically, the temperatures mean values obtained through measurement by the method described in Examples.

In the general formula (b-1), the alkyl groups capable of being selected as R¹ to R⁴ may be straight-chain alkyl groups or may be branched chain alkyl groups.

Specific examples of the alkyl groups include a methyl group, an ethyl group, a propyl group (n-propyl group, isopropyl group), a butyl group (n-butyl group, s-butyl group, t-butyl group, isobutyl group), a pentyl group, a hexyl group, a heptyl group, an octyl group, a 2-ethylhexyl group, a nonyl group, a decyl group, an undecyl group, a dodecyl group, a tridecyl group, a tetradecyl group, a pentadecyl group, a hexadecyl group, a heptadecyl group, and an octadecyl group.

In view of obtaining a lubricating oil composition having more improved wear resistance and oil film retention while having more improved heat resistance, the number of carbon atoms of the alkyl group is preferably 1 to 30, more preferably 1 to 20, still more preferably 1 to 16, still much more preferably 1 to 12, and particularly preferably 3 to 10.

Examples of the alkyl groups capable of being selected as R¹¹ to R¹³ in the general formula (i) or (ii) include the same groups as described for the alkyl groups capable of being selected as R¹ to R⁴ in the general formula (b-1), and they may be straight-chain alkyl groups or may be branched chain alkyl groups.

In the group (I), R¹¹ in the general formula (i) is preferably an alkyl group having 1 to 15 carbon atoms, and more preferably a straight-chain alkyl group having 1 to 15 carbon atoms, in view of obtaining a lubricating oil composition having more improved wear resistance and oil film retention while having more improved heat resistance.

The number of carbon atoms of the alkyl group capable of being selected as R¹¹ is preferably 1 to 15, but it is more preferably 1 to 11, still more preferably 1 to 9, and still much more preferably 1 to 7.

The compound (B1) used in one embodiment of the present invention is preferably a compound having, as the groups (I), both of a group (I-1) wherein R¹¹ in the general formula (i) is an alkyl group having 1 to 3 carbon atoms, and a group (I-2) wherein R¹¹ in the general formula (i) is an alkyl group having 4 to 15 carbon atoms. The compound having primary alkyl groups having different numbers of carbon atoms can be ZnDTP having a high decomposition temperature and a low decomposition rate.

The number of carbon atoms of the group (I-2) is preferably 4 to 15, and in view of obtaining a lubricating oil composition having more improved wear resistance and oil film retention while having more improved heat resistance, it is more preferably 4 to 11, still more preferably 4 to 9, and still much more preferably 4 to 7.

The group (I-2) may be a straight-chain alkyl group or may be a branched chain alkyl group, but it is preferably a straight-chain alkyl group.

In the group (II), it is preferable that R¹² and R¹³ in the general formula (ii) be each independently an alkyl group having 1 to 3 carbon atoms, and it is more preferable that both of them be methyl groups, in view of obtaining the compound (B1) that can improve wear resistance and oil film retention of the lubricating oil composition.

Herein, the component (B) encompasses all the compounds each corresponding to a zinc dithiophosphate (ZnDTP) represented by the following general formula (b). 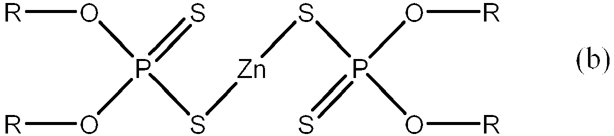 wherein R represents a substituent. Examples of the substituents include the aforementioned alkyl groups, an alkenyl group, a cycloalkyl group, an alkylcycloalkyl group, an aryl group, an alkylaryl group, and an arylalkyl group.

Among ZnDTP represented by the general formula (b), ZnDTP in which substituents represented by R in the general formula (b) are alkyl groups and which has at least one group (I) and at least one group (II) among them is the compound (B1). On that account, in the lubricating oil composition of one embodiment of the present invention, ZnDTP that does not correspond to the compound (B1) may be contained as the component (B).

In the lubricating oil composition of one embodiment of the present invention, the component (B) has a total content of the group (I) and the group (II) of preferably 70 to 100 mol%, more preferably 80 to 100 mol%, still more preferably 90 to 100 mol%, and still much more preferably 95 to 100 mol%, based on 100 mol% of the total amount of substituents present in the component (B) .

In the lubricating oil composition of one embodiment of the present invention, the component (B) has a content of the group (II) of preferably 5 to 70 mol%, more preferably 10 to 60 mol%, still more preferably 15 to 55 mol%, still much more preferably 20 to 50 mol%, and particularly preferably 25 to 45 mol%, based on 100 mol% of the total amount of substituents present in the component (B), in view of obtaining a lubricating oil composition having more improved wear resistance and oil film retention while having more improved heat resistance.

In the lubricating oil composition of one embodiment of the present invention, the component (B) has a content of the group (I) of preferably 30 to 95 mol%, more preferably 40 to 90 mol%, still more preferably 50 to 85 mol%, still much more preferably 60 to 80 mol%, and particularly preferably 65 to 75 mol%, based on 100 mol% of the total amount of substituents present in the component (B), in view of obtaining a lubricating oil composition having more improved wear resistance and oil film retention while having more improved heat resistance.

In the lubricating oil composition of one embodiment of the present invention, the component (B) has a content of the group (I-1) of preferably 5 to 80 mol%, more preferably 15 to 70 mol%, still more preferably 20 to 65 mol%, still much more preferably 25 to 60 mol%, and particularly preferably 30 to 55 mol%, based on 100 mol% of the total amount of substituents present in the component (B), in view of obtaining a lubricating oil composition having more improved wear resistance and oil film retention while having more improved heat resistance.

In the lubricating oil composition of one embodiment of the present invention, the component (B) has a content of the group (I-2) of preferably 5 to 70 mol%, more preferably 10 to 60 mol%, still more preferably 15 to 55 mol%, still much more preferably 20 to 50 mol%, and particularly preferably 23 to 45 mol%, based on 100 mol% of the total amount of substituents present in the component (B), in view of obtaining a lubricating oil composition having more improved wear resistance and oil film retention while having more improved heat resistance.

The "content of a group, based on 100 mol% of the total amount of substituents present in the component (B)" means a molar ratio of the group in question when the total amount of substituents (R in the general formula (b)) present in ZnDTP of the component (B) contained in the lubricating oil composition of one embodiment of the present invention is regarded as 100 mol%.

The content of the aforementioned each group means a value obtained by analyzing the component (B) in question by a ¹³C-NMR quantitative spectrum to identify the types of the substituents present in the component (B) and then performing calculation based on the analysis of the ¹³C-NMR quantitative spectrum, and specifically, it means a value obtained through measurement and calculation by the method described in Examples.

In the lubricating oil composition of one embodiment of the present invention, the content of the component (B) is preferably 0.10 to 3 mass%, more preferably 0.20 to 2.5 mass%, still more preferably 0.30 to 2.0 mass%, still much more preferably 0.40 to 1.5 mass%, and particularly preferably 0.50 to 1.0 mass%, based on the total amount (100 mass%) of the lubricating oil composition, in view of obtaining a lubricating oil composition having both of more improved seizure resistance and wear resistance.

In the lubricating oil composition of one embodiment of the present invention, the content of the component (B) in terms of zinc atoms is preferably 300 to 1500 ppm by mass, more preferably 350 to 1350 ppm by mass, still more preferably 400 to 1200 ppm by mass, still much more preferably 450 to 1100 ppm by mass, and particularly preferably 500 to 1000 ppm by mass, based on the total amount (100 mass%) of the lubricating oil composition, from the same viewpoint as above.

Herein, the content of zinc atoms means a value obtained through measurement in accordance with JPI-5S-38-92.

### <Component (C): calcium sulfonate>

The lubricating oil composition of the present invention contains, as a component (C), calcium sulfonate. By incorporating the component (C), a lubricating oil composition having more improved lubricity and sludge dispersing properties can be obtained.

As the component (C) used in one embodiment of the present invention, calcium sulfonate having a base number of 0 to 800 mgKOH/g can be used.

However, in view of obtaining a lubricating oil composition having more improved lubricity and sludge dispersing properties, the base number of the component (C) used in one embodiment of the present invention is preferably 100 mgKOH/g or more, more preferably 200 mgKOH/g or more, still more preferably 300 mgKOH/g or more, still much more preferably 350 mgKOH/g or more, and particularly preferably 400 mgKOH/g or more.

On the other hand, the base number of the component (C) may be 800 mgKOH/g or less, 750 mgKOH/g or less, 5700 mgKOH/g or less, 650 mgKOH/g or less, 600 mgKOH/g or less, or 550 mgKOH/g or less.

Herein, the "base number" means a base number obtained through measurement by perchloric acid method in accordance with JIS K2501:2003 "Petroleum products and lubricants - Determination of neutralization number", 7.

In the lubricating oil composition of one embodiment of the present invention, the content of the component (C) is preferably 0.001 to 5.0 mass%, more preferably 0.005 to 3.0 mass%, still more preferably 0.01 to 2.0 mass%, and still much more preferably 0.02 to 1.0 mass%, based on the total amount (100 mass%) of the lubricating oil composition, in view of obtaining a lubricating oil composition having more improved lubricity and sludge dispersing properties.

### <Metal sulfonate, metal salicylate and metal phenate other than component (C)>

The lubricating oil composition of one embodiment of the present invention may contain a metal compound selected from a metal sulfonate, a metal salicylate and a metal phenate other than the component (C) as long as the effects of the present invention are not impaired.

These metal compounds may be used singly, or may be used in combination of two or more.

These metal compounds may be any of neutral, basic and overbased, and for example, a metal compound having a base number of 0 to 800 mgKOH/g can be used.

Specific examples of the metal compounds include sodium sulfonate, magnesium sulfonate, barium sulfonate, calcium salicylate, sodium salicylate, magnesium salicylate, barium salicylate, calcium phenate, sodium phenate, magnesium phenate, and barium phenate.

In the lubricating oil composition of one embodiment of the present invention, the content of the metal compound may be 0 to 200 parts by mass, 0 to 150 parts by mass, 0 to 100 parts by mass, 0 to 50 parts by mass, 0 to 10 parts by mass, 0 to 1 part by mass, or 0 to 0.1 part by mass, per 100 parts by mass of the total amount of the component (C) contained in the lubricating oil composition.

### <Component (D): seal sweller>

The lubricating oil composition of the present invention contains, as a component (D), a seal sweller. By incorporating the component (D), a lubricating oil composition capable of preventing seal cure and thereby suppressing oil leak can be obtained.

Examples of the component (D) used in one embodiment of the present invention include aliphatic alcohols having 8 to 13 carbon atoms, such as tridecyl alcohol; aliphatic hydrocarbon esters or aromatic hydrocarbon esters, such as dihexyl phthalate; and alkoxy sulfolanes, such as 3-isodecyloxy-sulfolane.

These as the component (D) may be used singly, or may be used in combination of two or more.

The component (D) used in one embodiment of the present invention preferably contains an alkoxy sulfolane, and more preferably contains 3-isodecyloxy-sulfolane.

In the lubricating oil composition of one embodiment of the present invention, the content of the alkoxy sulfolane (or 3-isodecyloxy-sulfolane) is preferably 50 to 100 mass%, more preferably 70 to 100 mass%, still more preferably 80 to 100 mass%, still much more preferably 90 to 100 mass%, and particularly preferably 95 to 100 mass%, based on the total amount (100 mass%) of the component (D) contained in the lubricating oil composition.

In the lubricating oil composition of one embodiment of the present invention, the content of the component (D) is preferably 0.001 to 1.5 mass%, more preferably 0.005 to 1.2 mass%, still more preferably 0.01 to 1.0 mass%, still much more preferably 0.05 to 1.0 mass%, and particularly preferably 0.10 to 0.8 mass%, based on the total amount (100 mass%) of the lubricating oil composition.

### <Component (E): friction modifier>

The lubricating oil composition of one embodiment of the present invention may contain, as a component (E), a friction modifier.

The component (E) may be used singly, or may be used in combination of two or more.

Examples of the component (E) used in one embodiment of the present invention include ashless friction modifies, such as an aliphatic amine, a fatty acid ester, a fatty acid, an aliphatic alcohol, and an aliphatic ether.

The component (E) used in one embodiment of the present invention preferably contains a fatty acid ester among these.

As the fatty acid ester, a partial ester compound having one or more hydroxyl groups, such as a partial ester compound obtained by the reaction of a fatty acid with an aliphatic polyhydric alcohol, can be mentioned.

Examples of the fatty acid to constitute the fatty acid ester include saturated fatty acids, such as caproic acid, caprylic acid, capric acid, lauric acid, myristic acid, palmitic acid, stearic acid, arachic acid, behenic acid, and lignoceric acid; and unsaturated fatty acids, such as myristoleic acid, palmitoleic acid, oleic acid, and linoleic acid.

The aliphatic polyhydric alcohol to constitute the fatty acid ester is preferably a polyhydric alcohol of a dihydric to hexahydric alcohol, and specific examples thereof include ethylene glycol, glycerol, trimethylolpropane, pentaerythritol, and sorbitol.

The component (E) used in one embodiment of the present invention preferably contains at least one of pentaerythritol monooleate and glycerol monooleate, and more preferably contains both of pentaerythritol monooleate and glycerol monooleate.

When pentaerythritol monooleate and glycerol monooleate are used in combination as the components (E), the content of glycerol monooleate is preferably 0.1 to 200 parts by mass, more preferably 0.5 to 100 parts by mass, still more preferably 1 to 50 parts by mass, still much more preferably 2 to 30 parts by mass, and particularly preferably 3 to 20 parts by mass, per 100 parts by mass of pentaerythritol monooleate.

In the lubricating oil composition of one embodiment of the present invention, the content of the component (E) is preferably 0.01 to 10 mass%, more preferably 0.05 to 8.0 mass%, still more preferably 0.1 to 6.0 mass%, and still much more preferably 0.5 to 4.5 mass%, based on the total amount (100 mass%) of the lubricating oil composition.

The lubricating oil composition of one embodiment of the present invention may be a lubricating oil composition that does not substantially contain a molybdenum-based friction modifier, such as molybdenum dithiocarbamate (MoDTC) or molybdenum dithiophosphate (MoDTP).

In such a lubricating oil composition, the content of molybdenum atoms may be less than 100 ppm by mass, less than 50 ppm by mass, less than 10 ppm by mass, less than 5 ppm by mass, less than 1 ppm by mass, less than 0.1 ppm by mass, less than 0.01 ppm by mass, or 0 ppm by mass (not detected), based on the total amount (100 mass%) of the lubricating oil composition.

Herein, the content of molybdenum atoms means a value obtained through measurement in accordance with JPI-5S-38-92.

### <Component (F): viscosity index improver>

The lubricating oil composition of one embodiment of the present invention may contain, as a component (F), a viscosity index improver.

The component (F) may be used singly, or may be used in combination of two or more.

Examples of the component (F) used in one embodiment of the present invention include olefin-based copolymers such as an ethylene-α-olefin copolymer, and polymethacrylates at least having a constituent unit derived from an alkyl acrylate or an alkyl methacrylate.

The weight-average molecular weight (Mw) of the component (F) used in one embodiment of the present invention is preferably 5,000 to 1,000,000, more preferably 10,000 to 800,000, still more preferably 30,000 to 700,000, and still much more preferably 50,000 to 600,000.

Herein, the weight-average molecular weight (Mw) is a value, in terms of standard polystyrene, obtained through measurement by a gel permeation chromatography (GPC) method, and specifically means a value obtained through measurement by the method described in Examples.

In the lubricating oil composition of one embodiment of the present invention, the content of the component (F) is preferably 0.01 to 15 mass%, more preferably 0.1 to 10 mass%, still more preferably 0.5 to 5.0 mass%, and still much more preferably 1.0 to 3.0 mass%, based on the total amount (100 mass%) of the lubricating oil composition.

Resin components, such as the viscosity index improver and an anti-foaming agent described later, are each often on the market in the form of a solution in which such a substance is dissolved in a diluent oil, taking handling properties and solubility in the base oil (A) into consideration.

Herein, however, in the case of the solution dissolved in a diluent oil, the content of the resin component, such as the viscosity index improver or the anti-foaming agent, is a content in terms of the resin component (solid component), excluding the mass of the diluent oil.

### <Lubricating oil additives>

The lubricating oil composition of one embodiment of the present invention may further contain lubricating oil additives other than the components (B) to (F) when needed, as long as the effects of the present invention are not impaired.

Examples of such lubricating oil additives include an antioxidant, a pour point depressant, an extreme pressure agent, an ashless dispersant, a demulsifier, a metal deactivator, an anti-rust agent, an anti-foaming agent, and a colorant.

These lubricating oil additives may be each used singly, or may be each used in combination of two or more.

The contents of these lubricating oil additives can be each appropriately adjusted as long as the effects of the present invention are not impaired, but the contents of the additives are each independently preferably 0.0001 to 15 mass%, more preferably 0.0005 to 10 mass%, and still more preferably 0.001 to 5 mass%, based on the total amount (100 mass%) of the lubricating oil composition.

### <Method for producing lubricating oil composition>

The method for producing a lubricating oil composition of one embodiment of the present invention is not particularly limited, but in view of productivity, preferable is a method including a step of adding the components (B) to (D), and if necessary, the components (E) and (F) and other lubricating oil additives to the component (A).

It is preferable that the resin component such as the component (F) be in the form of a solution in which it is dissolved in a diluent oil and that the solution be added to the component (A), in view of compatibility with the component (A).

### [Properties of lubricating oil composition]

The kinematic viscosity of the lubricating oil composition of one embodiment of the present invention at 40°C is preferably 5.0 to 130 mm²/s, more preferably 6.5 to 100 mm²/s, still more preferably 8.0 to 70 mm²/s, still much more preferably 10.0 to 50 mm²/s, and particularly preferably 11.5 to 40 mm²/s.

The viscosity index of the lubricating oil composition of one embodiment of the present invention is preferably 90 or more, more preferably 100 or more, still more preferably 110 or more, still much more preferably 130 or more, and particularly preferably 150 or more.

The content of zinc atoms in the lubricating oil composition of one embodiment of the present invention is preferably 300 to 1500 ppm by mass, more preferably 350 to 1350 ppm by mass, still more preferably 400 to 1200 ppm by mass, still much more preferably 450 to 1100 ppm by mass, and particularly preferably 500 to 1000 ppm by mass, based on the total amount (100 mass%) of the lubricating oil composition.

### [Characteristics and application of lubricating oil composition]

The lubricating oil composition of one embodiment of the present invention not only is excellent in wear resistance but also has high oil film retention to result in excellent lubricity, even when it is used in a high-temperature environment.

As a specific index of these characteristics, the wear width is preferably 0.65 mm or less, more preferably 0.60 mm or less, still more preferably 0.55 mm or less, still much more preferably 0.50 mm or less, and particularly preferably 0.45 mm or less, as measured when a reciprocating dynamic friction test in accordance with the description of Examples mentioned later is carried out on the lubricating oil composition of one embodiment of the present invention.

It can be said that as the value of the wear width is smaller, the wear resistance of the lubricating oil composition is better even in the use in a high-temperature environment.

The load at zero insulation ratio is preferably 1.3 kgf or more, more preferably 1.4 kgf or more, and still more preferably 1.5 kgf or more, as measured when an energized reciprocating dynamic friction test in accordance with the description of Examples mentioned later is carried out on the lubricating oil composition of one embodiment of the present invention.

The "load at zero insulation ratio" is a load when the insulation ratio becomes 0% in the course of gradually increasing the load added to an oil film formed between two test specimens because the oil film is not retained to bring the two test specimens into contact with each other. On that account, it can be said that as the value of the load at zero insulation ratio is larger, the oil film retention of the lubricating oil composition is higher to result in better lubricity.

The insulation ratio at 0.3 kgf is preferably 130 or more, more preferably 14% or more, and still more preferably 15% or more, as measured when an energized reciprocating dynamic friction test in accordance with the description of Examples mentioned later is carried out on the lubricating oil composition of one embodiment of the present invention.

The "insulation ratio at 0.3 kgf" is an insulation ratio obtained when a load becomes 0.3 kgf in the course of gradually increasing the load added to an oil film formed between two test specimens. On that account, it can be said that as the value of the insulation ratio at 0.3 kgf is larger, the oil film retention of the lubricating oil composition is higher to result in better lubricity because the oil film thickness is ensured.

Since the lubricating oil composition of one embodiment of the present invention has such characteristics as above, it can be preferably applied to lubrication of various machines, and it can be applied to, for example, lubricating oil for a shock absorber, hydraulic oil, hydraulic oil for construction machinery, power steering fluid, turbine oil, compressor oil, machine tool lubricating oil, cutting oil, gear oil, fluid bearing oil, and rolling bearing oil. The lubricating oil composition of one embodiment of the present invention can be preferably applied to a shock absorber among these. More specifically, the lubricating oil composition of one embodiment of the present invention can be used for any of a double cylinder type shock absorber and a single cylinder type shock absorber, and can be preferably used for any of shock absorbers for motorcycles and for four-wheeled vehicles.

When these characteristics of the lubricating oil composition of one embodiment of the present invention are taken into consideration, the present invention can also provide the following [1] and [2].
[1] A shock absorber filled with the aforementioned lubricating oil composition of one embodiment of the present invention.
[2] Use of a lubricating oil composition, in which the aforementioned lubricating oil composition of one embodiment of the present invention is applied to lubrication of a shock absorber.

### Examples

Next, the present invention will be described in much more detail with reference to Examples, but the present invention is in no way limited to these Examples. Measuring methods or evaluation methods for various properties are as follows.

### (1) Kinematic viscosity, viscosity index

The measurement and calculation were performed in accordance with JIS K2283:2000.

### (2) Aniline point

The measurement was performed in accordance with JIS K2256:2013.

### (3) Content of groups present in zinc dithiophosphate

A ¹³C-NMR quantitative spectrum of a zinc dithiophosphate in question was analyzed to specify the types of substituents present in the zinc dithiophosphate. Then, on the basis of the analysis of the ¹³C-NMR quantitative spectrum, the content of each substituent based on 100 mol% of the total amount of the substituents (R in the general formula (b)) in the zinc dithiophosphate was calculated.

### (4) 50% Mass loss temperature, difference between 50% mass loss temperature and 5% mass loss temperature

A zinc dithiophosphate in question whose mass had been measured in advance was placed in a differential thermal analyzer and heated at a rate of 10°C/min, and the temperature at which the mass of the heated zinc dithiophosphate was reduced by 5 mass% based on the initial mass (5% mass loss temperature) and the temperature at which the mass thereof was reduced by 50 mass% based on the same (50% mass loss temperature) were measured.

### (5) Content of zinc atoms

The measurement was performed in accordance with JPI-5S-38-2003.

### (6) Base number

The measurement was performed in accordance with JIS K2501:2003 (perchloric acid method).

### (7) Weight-average molecular weight (Mw)

Using a gel permeation chromatograph apparatus (manufactured by Agilent Technologies, Inc., "1260 model HPLC"), the weight-average molecular weight was measured under the following conditions, and the found value in terms of standard polystyrene was used.

### (Measurement conditions)

Column: sequentially connected two of "Shodex LF404".
Column temperature: 35°C
Eluent: chloroform
Flow rate: 0.3 mL/min

### Evaluation of decomposition temperatures and decomposition rates of various zinc dithiophosphates

For each of various ZnDTP (1) to (8) having different combinations of substituents from one another, a "50% mass loss temperature" and a "difference between 50% mass loss temperature and 5% mass loss temperature" were measured and calculated in accordance with the aforementioned measuring method. The results are set forth in Table 1. A higher "50% mass loss temperature" indicates a higher decomposition temperature of ZnDTP, and a smaller "difference between 50% mass loss temperature and 5% mass loss temperature" indicates a lower decomposition rate of ZnDTP.

### [Table 1]

**Table 1**

| | | ZnDTP (1) | | ZnDTP (2) | | ZnDTP (3) | | ZnDTP (4) | |
|---|---|---|---|---|---|---|---|---|---|
| | | Type | Content | Type | Content | Type | Content | Type | Content |
| Composition of substituents | | Group (II): Sec C3 | 28 mol% | Group (I): Pri C8 | 100 mol% | Group (I): Pri C4 | 72 mol% | Group (I): Pri C12 | 100 mol% |
| | | Group (I): Pri C4 | 46 mol% | | | Group (I): Pri C6 (iso) | 14 mol% | | |
| | | Group (I): Pri C8 | 26 mol% | | | Group (I): Pri C6 (n) | 8 mol% | | |
| | | | | | | Group (I): Pri C8 | 6 mol% | | |
| 50% Mass loss temperature | °C | 233 | | 254 | | 256 | | 316 | |
| Difference between 50% mass loss temperature and 5% mass loss temperature | °C | 52 | | 16 | | 38 | | 68 | |
| Zn content | mass% | 8.74 | | 7.62 | | 8.69 | | 7.00 | |
| | | | | | | | | | |

| | | ZnDTP (5) | | ZnDTP (6) | | ZnDTP (7) | | ZnDTP (8) | |
|---|---|---|---|---|---|---|---|---|---|
| | | Type | Content | Type | Content | Type | Content | Type | Content |
| Composition of substituents | | Group (II): See C4-C6 | 100 mol% | Group (II): See C3-C6 | 100 mol% | Group (II): Sec C6 | 100 mol% | Group (II): See C3 | 50 mol% |
| | | | | | | | | Group (II): See C6 | 50 mol% |
| 50% Mass loss temperature | °C | 210 | | 203 | | 210 | | 212 | |
| Difference between 50% mass loss temperature and 5% mass loss temperature | °C | 6 | | 7 | | 0 | | 6 | |

Abbreviated names of the types of the substituents in Table 1 above are as follows.

### <Group (I)>

"Pri C4": group (I) in which R¹¹ in the formula (i) is an n-propyl group.

"Pri C8": group (I) in which R¹¹ in the formula (i) is an n-heptyl group.

"Pri C6(iso)": group (I) in which R¹¹ in the formula (i) is an isopentyl group.

"Pri C6(n)": group (I) in which R¹¹ in the formula (i) is an n-pentyl group.

"Pri C12": group (I) in which R¹¹ in the formula (i) is a C11 alkyl group.

### <Group (II)>

"Sec C3": group (II) in which R¹² and R¹³ in the formula (ii) are each a methyl group.

"Sec C6": secondary alkyl group (II) represented by the formula (ii) and having 6 carbon atoms.

"Sec C4-C6": secondary alkyl group (II) represented by the formula (ii) and having any one of 4 to 6 carbon atoms.

"Sec C3-C6": secondary alkyl group (II) represented by the formula (ii) and having any one of 3 to 6 carbon atoms.

From Table 1, it can be seen that ZnDTP (1) having both of the group (I) and the group (II) has a high "50% mass loss temperature" and also has a large "difference between 50% mass loss temperature and 5% mass loss temperature". On that account, it can be said that ZnDTP (1) has a high decomposition temperature and a low decomposition rate, so that it is excellent in heat resistance.

On the other hand, ZnDTP (2) to (8) each having any one of the group (I) and the group (II) have a problem in terms of at least one of a decomposition temperature and a decomposition rate.

### Example 1, Comparative Examples 1 to 3

Using the types and the amounts shown in Table 2, various additives were added to a base oil, thereby preparing each lubricating oil composition. PMA and the anti-foaming agent described in Table 1 were each added in a state where it was dissolved in a diluent oil, and the amounts thereof were each an amount also including the mass of the diluent oil for dissolving the PMA or the anti-foaming agent.

Details of the base oil and various additives used in the preparation of each lubricating oil composition are as follows.

### <Component (A): base oil>

"Paraffinic mineral oil": paraffinic mineral oil having 40°C kinematic viscosity = 9.07 mm²/s, 100°C kinematic viscosity = 2.54 mm²/s, viscosity index = 109, and aniline point = 104°C.

### <Component (B): zinc dithiophosphate>

Any one of ZnDTP (1) to (4) shown in Table 1 above was used.

### <Component (C): calcium sulfonate>

"Ca sulfonate": calcium sulfonate having a base number of 405 mgKOH/g.

### <Component (D): seal sweller>

"Alkoxy sulfolane": 3-isodecyloxy-sulfolane.

### <Component (E): friction modifier>

"Fatty acid ester (1)": pentaerythritol monooleate.
"Fatty acid ester (2)": glycerol monooleate

### <Component (F): viscosity index improver>

"PMA": polymethacrylate having Mw = 550000.

### <Other components>

"Anti-foaming agent": fluorine-containing organopolysiloxane.

### "Colorant"

For the lubricating oil compositions prepared, the 40°C kinematic viscosity, the viscosity index and the content of atoms were measured or calculated in accordance with the aforementioned methods, and the following evaluation was carried out. The results of them are set forth in Table 2.
(1) Measurement of wear width by reciprocating dynamic friction test

Using a Bowden type reciprocating dynamic friction tester, a test was carried out under the following test conditions, and a wear width at the central part of a wear mark formed on a steel plate of a lower-side test specimen was measured. It can be said that as the wear width is smaller, the wear resistance of the lubricating oil composition is better even in the use in a high-temperature environment. In the present Examples, a case where the wear width was 0.65 mm or less was rated as "pass". When the wear width was 0.70 mm or more, the evaluation was finished without performing an energized reciprocating dynamic friction test of (2) described below.

### (Test conditions)

Oil temperature: 100°C
Amplitude: 10 mm
Velocity: 50 mm/s
Load: 3 kgf
Testing time: 30 minutes
Friction material: upper-side test specimen: 1/2-inch glass sphere, lower-side test specimen: steel plate

### (2) Energized reciprocating dynamic friction test

Using a Bowden type reciprocating dynamic friction tester, a load was stepwise increased from 0.1 kgf to 5 kgf under the following conditions while energizing, and in the course of this, a load when the insulation ratio became 0% because the oil film was not retained to bring the two test specimens into contact with each other (also referred to as "load at zero insulation ratio" hereinafter) was measured. Further, an insulation ratio when the load was 0.3 kgf (also referred to as "insulation ratio at 0.3 kgf" hereinafter) was also measured. It can be said that as the load at zero insulation ratio is larger, the oil film retention of the lubricating oil composition is higher to result in better lubricity, and the same also applies to the insulation ratio at 0.3 kgf. In the present Examples, a case where the "load at zero insulation ratio" and the "insulation ratio at 0.3 kgf" were 1.3 kgf or more and 13% or more, respectively, was rated as "pass".

### (Test conditions)

Oil temperature: room temperature (25°C)
Amplitude: 2 mm
Excitation frequency: 1 Hz
Load: load is stepwise increased from 0.1 kgf to 5 kgf.
Friction material: upper-side test specimen: 1/2-inch SUJ2 steel ball, lower-side test specimen: Cr plated plate

### [Table 2]

**Table 2**

| | | | | Example 1 | Comparative Example 1 | Comparative Example 2 | Comparative Example 3 |
|---|---|---|---|---|---|---|---|
| Formulation of lubricating oil composition | Component (A) | Paraffinic mineral oil | mass% | 94.045 | 94.045 | 94.045 | 94.045 |
| | Component (B) | ZnDTP(1) | mass% | 0.800 | - | - | - |
| | | ZnDTP(2) | mass% | - | 0.800 | - | - |
| | | ZnDTP(3) | mass% | - | - | 0.800 | - |
| | | ZnDTP(4) | mass% | - | - | - | 0.800 |
| | Component (C) | Ca sulfonate | mass% | 0.030 | 0.030 | 0.030 | 0.030 |
| | Component (D) | Alkoxy sulfone | mass% | 0.400 | 0.400 | 0.400 | 0.400 |
| | Component (E) | Fatty acid ester(1) | mass% | 3.000 | 3.000 | 3.000 | 3.000 |
| | | Fatty acid ester(2) | mass% | 0.300 | 0.300 | 0.300 | 0.300 |
| | Component (F) | PMA | mass% | 1.400 | 1.400 | 1.400 | 1.400 |
| | Other components | Anti-foaming agent | mass% | 0.002 | 0.002 | 0.002 | 0.002 |
| | | Colorant | mass% | 0.023 | 0.023 | 0.023 | 0.023 |
| | Total | | mass% | 100.000 | 100.000 | 100.000 | 100.000 |
| | 50% Mass loss temperature | | °C | 233 | 254 | 256 | 316 |
| Properties of component (B) | Difference between 50% mass loss temperature and 5% mass loss temperature | | °C | 52 | 16 | 38 | 68 |
| Properties of lubricating oil composition | Kinematic viscosity at 40°C | | mm²/s | 12.05 | 12.01 | 12.09 | 12.06 |
| | Viscosity index | | - | 159 | 158 | 159 | 158 |
| | Zn content | | ppm by mass | 610 | 699 | 695 | 560 |
| Tests | Reciprocating dynamic friction test Wear width | | mm | 0.439 | 0.685 | 0.644 | 0.729 |
| | Energized reciprocating dynamic friction test Load at zero insulation ratio | | kgf | 1.5 | 0.9 | 2.0 | (^{∗}) |
| | Energized reciprocating dynamic friction test Insulation ratio at 0.3 kgf | | % | 15 | 5 | 12 | (^{∗}) |

| | | | | | | | |
|---|---|---|---|---|---|---|---|
| (^{∗}): Since the wear width measured in the reciprocating dynamic friction test was 0.700 or more, the energized reciprocating dynamic friction test was not performed. | | | | | | | |

From Table 2, the result for the lubricating oil composition prepared in Example 1 was superior in wear resistance, lubricity, etc. to the lubricating oil compositions of Comparative Examples 1 to 3. On the other hand, the result for the lubricating oil composition of Comparative Example 1 was inferior in lubricity, and the result for the lubricating oil composition of Comparative Example 2 was inferior in wear resistance. The wear width of the lubricating oil composition of Comparative Example 3, as measured in the reciprocating dynamic friction test, was 0.700 or more, which means markedly poor wear resistance, and accordingly, the evaluation was finished without performing the energized reciprocating dynamic friction test.

## Claims

1. A lubricating oil composition comprising a base oil (A), a zinc dithiophosphate (B) comprising a compound (B1) represented by the following general formula (b-1), calcium sulfonate (C), and a seal sweller (D), 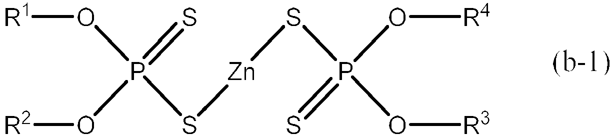
wherein R¹ to R⁴ are each independently an alkyl group;
with the proviso that at least one of R¹ to R⁴ is a group (I) represented by the following general formula (i), and at least one of R¹ to R⁴ is a group (II) represented by the following general formula (ii): 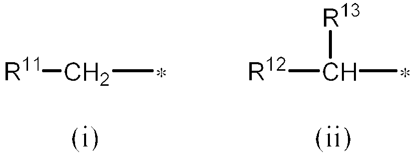
wherein R¹¹ to R¹³ are each independently an alkyl group.

2. The lubricating oil composition according to claim 1, wherein R¹² and R¹³ in the general formula (ii) are each independently an alkyl group having 1 to 3 carbon atoms.

3. The lubricating oil composition according to claim 1 or 2, wherein R¹¹ in the general formula (i) is an alkyl group having 1 to 15 carbon atoms.

4. The lubricating oil composition according to claim 3, wherein the compound (B1) is a compound having, as the groups (I), both of a group (I-1) wherein R¹¹ in the general formula (i) is an alkyl group having 1 to 3 carbon atoms, and a group (I-2) wherein R¹¹ in the general formula (i) is an alkyl group having 4 to 15 carbon atoms.

5. The lubricating oil composition according to any one of claims 1 to 4, wherein the component (B) has a content of the group (II) of 5 to 70 mol% based on 100 mol% of the total amount of substituents present in the component (B) .

6. The lubricating oil composition according to any one of claims 1 to 5, wherein the component (B) has a content of the group (I-1) of 5 to 80 mol% based on 100 mol% of the total amount of substituents present in the component (B).

7. The lubricating oil composition according to any one of claims 1 to 6, wherein the component (B) has a content of the group (I-2) of 5 to 70 mol% based on 100 mol% of the total amount of substituents present in the component (B).

8. The lubricating oil composition according to any one of claims 1 to 7, wherein a content of the component (B) in terms of zinc atoms is 300 to 1500 ppm by mass based on the total amount of the lubricating oil composition.

9. The lubricating oil composition according to any one of claims 1 to 8, wherein a base number of the component (C) is 100 mgKOH/g or more.

10. The lubricating oil composition according to any one of claims 1 to 9, wherein the component (D) comprises an alkoxy sulfolane.

11. The lubricating oil composition according to any one of claims 1 to 10, wherein the lubricating oil composition is used for a shock absorber.

12. A shock absorber filled with the lubricating oil composition according to any one of claims 1 to 11.

13. Use of a lubricating oil composition, wherein the lubricating oil composition according to any one of claims 1 to 11 is applied to lubrication of a shock absorber.
